# EUROPEAN PATENT SPECIFICATION

(11) **EP 2 117 129 B1**
(45) Date of publication and mention of the grant of the patent: **04.11.2015**
(21) Application number: 08290432.7
(22) Date of filing: 07.05.2008
(51) Int. Cl.: H04B 3/46

(54) **Access network monitoring device and method**
Zugangsnetzwerküberwachungsvorrichtung und -verfahren
Dispositif et procédé de surveillance de l'accès au réseau

(43) Date of publication of application: 11.11.2009
(73) Proprietor: ALCATEL LUCENT, 92100 Boulogne-Billancourt (FR)
(72) Inventor: Peeters, Michael, 2547 Lint (BE); Maes, Jochen, 2431 Veerle (BE); Guenach, Mamoun, 1800 Vilvoorde (BE)
(74) Representative: ALU Antw Patent Attorneys

(56) References cited:
- WO-A-2004/104531
- WO-A-2006/120513
- US-A1- 2004 095 921

## Description

### Field of the Invention

The present invention generally relates to the field of data transmission technology and more in particular to a device and method for monitoring crosstalk coupling between various communication channels of an access network.

### Background of the Invention

Next generation services require higher broadband throughput than typically available from exchange or remote node based digital subscriber lines (DSL). There is thus a great interest in increasing the capacity of copper pairs and binders. A binder is a single cable comprising a plurality of individual twisted pairs of telephone wires. However, the DSL access network is becoming harder to manage. The advanced knowledge required to correctly set the many parameters of a xDSL connection is often lacking. This causes substandard performance and customer dissatisfaction.

The twisting of telephone wires limits electromagnetic interference between nearby lines. However, signals from one line can still couple into other lines of the same binder or even of another binder. As a result, a local receiver can see signals from other lines, thus increasing the noise power and degrading the received signal quality on that line.

The coupling of unwanted signals from one or more lines into another line is known as crosstalk. In xDSL it can take two forms: near-end crosstalk (NEXT) and far-end crosstalk (FEXT). NEXT results when signals couple into the line transmitted in the direction opposite to the received signal. In contrast, FEXT occurs when a local receiver sees signals transmitted by one or more remote transmitters. In this case, interfering signals travel in the same direction as the received signal. The level of FEXT detected depends on the number of interferers and their proximity to the line of interest, the power spectral densities (PSDs) of the interfering signals and the frequency band in which FEXT occurs. The coupling of signals is often modelled to be proportional to the square of frequency. In addition, the detected FEXT level depends on the line itself: FEXT is proportional to both the line's attenuation and the line length over which coupling of unwanted signals occurs. In contrast to NEXT, which is essentially independent of the line's length and attenuation, on loops longer than a few hundred meters the absolute FEXT level decreases with increasing line length, because unwanted signals are attenuated by the length of the line into which they couple. For this reason, FEXT is usually an insignificant impairment on long lines such as ADSL, which typically span more than 3 km. FEXT is more significant on shorter VDSL lines (e.g. 400m), on which it can dominate noise profiles.

As crosstalk interference coming from other lines can drastically degrade the received signal, it is a major limiting factor in xDSL communications. Operators consequently try to apply a variety of measures like e.g. advanced signal processing techniques in order to reduce the impairment due to crosstalk. Such techniques often rely on calculating an estimation of the effect of crosstalk based on some crosstalk model or assumptions and subsequently compensate for the estimated performance reduction due to crosstalk. Part of the above-mentioned problem of limited system performance is due to the presence of what one might call crosstalk anomalies, i.e. crosstalk paths within a binder that do not conform to the usual physical model or assumptions.

One of the reasons why anomalies are found is that such model or assumptions for estimating the effect of crosstalk are often based on many simplifications. Also the success rate of provisioning, repair and maintenance visits depends directly on the accuracy of such network inventory data, since truck-rolls may turn out to be unnecessary or not well prepared, due to inaccuracies in the network database. However, as the copper network used for DSL today includes the legacy network designed for the telephone service, an operator may have some information on the topology of his network, but most of the time these databases have not been very well updated.

In an attempt to compensate for the crosstalk effect, many, if not all, of the current best practices to determine transmit power spectral densities (PSDs) use very conservative and smooth models instead of real crosstalk channels, with a number of implicit assumptions, which, as already mentioned, may not be appropriate at all. These assumptions can cause miscalculation in the algorithms used e.g. for determining a power backoff (PBO), causing links to fail to come up or to underperform. Hence, detecting such crosstalk anomalies can yield additional input that would allow determining an approach that does not fail or underperform. Additionally, the detection of these anomalies can yield additional insight into a possible misconfiguration of digital subscriber lines, compromised cables and cabinets or other bundle issues that do not show up in single line diagnostics.

Applying a power backoff to the transmit power spectral density is a way to mitigate the effect of near-far far-end crosstalk (FEXT). In an upstream scenario for example, transmitters must reduce their PSDs such that the levels of FEXT they inject into longer loops are lower. This process of reducing the upstream PSDs is known generically as upstream power backoff (UPBO). In a CO/RT scenario, whereby a digital subscriber line access multiplexer (DSLAM) is also located at a remote terminal (RT) between the central office (CO) and the customer premises equipment (CPE), the RT lines (i.e. the lines connecting the remote terminal with the CPE) have to perform a downstream power backoff (DPBO) to protect the downstream signal from the longer CO lines (i.e. the lines connecting the central office with the CPE).

The maximum allowed transmit (Tx) power spectral density (PSD) of a line is thus not only determined by the maximum Tx PSD described in the many standards, but is also dependent on the deployment scenario. Providing a power backoff as described above is an example. Another example is encountered in a scenario where in a given binder the several standardized band plans cannot be mixed in order to avoid overlap between upstream (US) and downstream (DS) frequency bands. The rules provided in a standard can easily be broken, either on purpose, e.g. for a small DSLAM in an apartment basement, for which often no regulation exists, or by accident, e.g. due to misconfiguration by the network operator.

Today, single-ended line testing (SELT) is used to extract the single loop characteristics based on reflectometry measurements on the line. A reflectogram is typically measured in the frequency domain. When converted to the time domain, the x-axis is representative for the time, as well as for the distance from the DSLAM. SELT provides information on the amount of segments in the loop, the segment lengths and gauges, and the presence of bridged taps. By correlating the single-loop characteristics of different lines, information can be obtained on the network topology.

Monitoring and policing of the rules imposed by a standard becomes even more important in an unbundled environment, where different operators are deploying DSLAMS in the same copper bundle network. Currently, some forms of power backoff policing are being looked at but these all relate to single line diagnostics, in which a DSLAM attempts to determine whether a CPE connected to that DSLAM is correctly applying power backoff.

A prerequisite for any form of optimization of a bundle of copper wires is reliable knowledge on the access network, such as topology of the binders in the access network and the interactions (crosstalk) between pairs. However, even to the network operators this information is not readily available. As already mentioned, they very often have some information on their legacy network topology, but the chances are high that part of the information is outdated. Unfortunately, it is impossible to retrieve topology information on buried bundles and it is too expensive to send out technicians to every DSLAM to figure out how the lines are patched through. Therefore, there is a need to acquire the knowledge on the topology and pair interactions in an automated fashion.

Application EP1630968-A1 discusses the problem of determining crosstalk levels. It proposes virtual binder identification through polling: This technique allows detecting which lines generate the highest amount of crosstalk towards a given transmission line of interest. It consists in continuously monitoring the on/off status and/or the noise margin of modems on different transmission lines. If a given modem is switched on and, as a consequence, a second modem switches off or experiences a loss in noise margin, the first modem/line can be identified as a dominant crosstalker with respect to the second modem/line. At the same time a crosstalk coupling constant can be estimated. The solution however is highly complex and infeasible in practice since on/off switching of modems is controlled by the end user and not by a central agent.

An improvement was disclosed in EP1760904-A1, which proposes generating at least one test signal having a unique identification code in the frequency domain. That code is associated with a first transmission line. Then, the test signal is sent on the first transmission line. At least a second transmission line is monitored for detecting a crosstalk signal. It is determined whether the crosstalk signal is caused by the test signal of the first transmission line by means of a signature of the unique identification code comprised in the crosstalk signal. In this way crosstalk between individual transmission lines can be determined without having to have recourse to conservative worst case assumptions.

US2004/0095921 relates to an automated system and method for management of digital subscriber lines (DSL). WO2006/120513 relates to identification of significant crosstalking offenders and their affected victims, which can be found by its scanning. WO2004/104531 relates to a method and system for improved single added loop make up identification.

### Aims of the invention

The present invention aims to provide a powerful tool and method for use in an access network to monitor the various communication channels that allow warning an operator a priori of an anomaly occurring on the network. The invention further aims to provide a method for constructing an information source for use in said tool and method.

### Summary of the Invention

The present invention relates to a method for monitoring the operating environment of a plurality of communication channels in an access network. The method comprises the steps of :
- determining an indication of the crosstalk coupling between a first and a second communication channel of said plurality,
- gathering information on crosstalk coupling between the first and the second communication channel from a database containing information indicative of crosstalk coupling between at least some communication channels of said plurality,
- comparing the information gathered in the previous step with the determined indication of the crosstalk coupling and identifying based on the comparison possible anomalies in the access network.
   The step of determining can be performed by measurement or by use of a suitable model.

Advantageously, in the step of gathering information also topology information is gathered from a database containing information on the topology of said transmission lines. In another embodiment information is gathered from a further database belonging to the operator of the access network.

In an advantageous embodiment the method further comprises the step of selecting a part of the access network that is to be monitored.

If an anomaly is identified, the method preferably comprises the further step of detecting the cause and/or impact of the anomaly. Advantageously, the method then comprises the further step of proposing actions to counter the effect of the anomaly.

In a preferred embodiment the access network is a DSL access network.

In another aspect the invention relates to a method for constructing a database containing information indicative of crosstalk coupling for use in a method for monitoring as above described. The method comprises the steps of :
- determining an indication of the crosstalk coupling between a first and a second channel of a plurality of communication channels of an access network,
- deriving from the determined indication of an upper bound for the crosstalk coupling between the first and second channel, and
- storing the upper bound in the database.

In a further aspect the invention relates to a device for monitoring the operating environment of a plurality of communication channels in an access network. The device comprises means for determining an indication of the crosstalk coupling between at least two of the communication channels and information gathering means for gathering information from a database containing information indicative of crosstalk coupling between the at least two of the communication channels. The device is **characterised in that** it further comprises processing means for comparing the received crosstalk indications with the information gathered from the database, whereby the processing means further is arranged for reporting an anomaly depending on the result of the comparison.

In a preferred embodiment the information gathering means is also arranged for gathering information on the topology of said communication channels. The device may further be arranged for being provided with information from a network operator's database.

The device for monitoring advantageously further comprises a selection means for selecting a part of said access network to be monitored.

In an advantageous embodiment the device is integrated in a network analyzer, whereby the network analyzer is arranged for determining an indication on crosstalk coupling between the at least two communication channels.

### Brief Description of the Drawings

Fig. 1 illustrates an overview of an embodiment of the device and method of the present invention.

Fig. 2 illustrates the segmentation of the DSL access network into serving areas.

Fig. 3 illustrates a further refinement of the access network.

### Detailed Description

The present invention is described below using the example of a DSL access network. However, it will be clear to the skilled person that the invention is not limited to this example. The tool and method of the invention may as well serve in any access network. Every network has a topology and its performance is impaired by crosstalk. For instance in wireless or optics, multiple access techniques are used based on frequency division multiplexing or orthogonal frequency division multiple access, in which the channel assigned to a user consists of a (set of) frequencie(s). Depending on the manner in which the information is transceived, crosstalk between frequency channels may occur. The terminology used in these technologies may differ. For example crosstalk may be referred to as co-channel interference. The various levels of dynamic spectrum management may be referred to as power control, interference cancellation, precoding, etc. Irrespective of the technology used in the access network, an indication of the crosstalk level can be obtained by processing a dataset containing information on signal-to-noise ratios taken at different instances. This knowledge can then be exploited to prequalify the system, for example to provide an indication of the gains that can be achieved by crosstalk mitigation techniques, for example power control, interference cancellation, or precoding.

In a preferred embodiment of the present invention a DSL network monitoring tool is disclosed that comprises a crosstalk database and, optionally, a topology database. The database contains a statistics collection of key operational DSL parameters as a basis for preventive maintenance actions. It allows comparing the observed (possibly measured) crosstalk channels for a given binder with the crosstalk noise levels predicted by statistics and physics (i.e. from the line length, PSD settings, topology database and statistics, crosstalk statistics, ...). From this comparison possible anomalies can be detected. Access network analysis is useful for the introduction and deployment of advanced DSL services as it facilitates upgrade decisions. It also helps in identifying poor lines that cause network problems (such as strong crosstalkers).

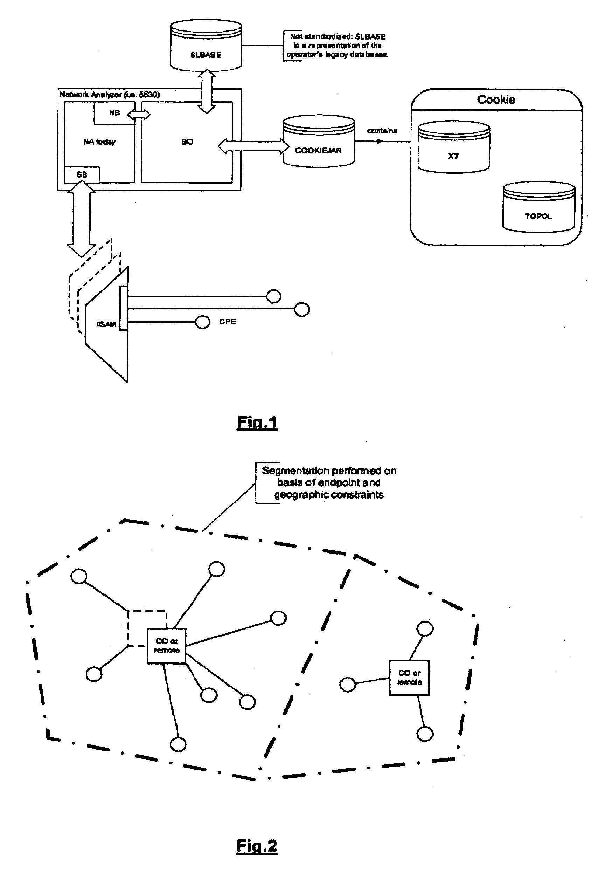

The method and device of the present invention can be explained by means of Fig.1. In an advantageous embodiment the device (BO) for monitoring and optimising a bundle of twisted pairs as in the invention is part of a network analyzer. However, it may as well be a stand-alone device, capable of communicating with a network analyzer or a DSLAM through a suitable interface or integrated in an access multiplexer.

The network analyzer is arranged for communicating with DSL access multiplexers (DSLAMs) via a suitable interface. These DSLAMs can be co-located, but more likely they are distributed throughout the operator's access network at many different central office (CO) or remote node (RT) locations.

The device of the invention allowing optimisation of a bundle of copper wires (each constituting a communication channel) is arranged for gathering information from a crosstalk database that optionally the device can generate on its own. Optionally, the device is further arranged for communicating with a database provided by the operator of the DSL access network. The operator database is denoted SLBASE in Fig.1 and contains the subscriber loop data. Note that the information that typically can be expected is likely not stored in a single logical location. The SLBASE database shown in Fig.1 should be considered as an abstraction of the operator's subscriber data. Although the exact format may vary, it can be assumed that at least the subscriber's address and the DSLAMs address can be deduced from this data, thus allowing identification of the subscriber loop endpoints.

Dynamic bundle management can be seen as an expansion of dynamic line management (DLM). DLM determines the best configuration profile (in terms of power, coding, rate) for a service, depending on the measured line conditions. For bundle optimisation the relationships between DSL lines are taken into account. Different lines often show similar rate/stability issues that may be caused by a common crosstalker, noise source or binder issue. An optimization at the bundle level is particularly important for VDSL2, since in practical situations this technology is limited by self-crosstalk. Identification of the strongest self-crosstalkers allows mitigation procedures such as:
- isolation of the strongest self-crosstalkers
- work around the self-crosstalker by other means such an advanced PSD shaping and artificial noise/virtual noise settings,
- removing the self-crosstalk by cancellation or precoding techniques (i.e. applying so called dynamic spectrum management (DSM) - level 3 techniques)

The crosstalk coupling database is filled and kept up to date by the BO during normal operation, based on measurements and reports from the network analyzer and on information derived from the SLBASE (see below for more details). Different processes within the BO take care of the buildup, maintenance and mining of these databases, depending on the use case. Optionally, there is also a database for topology information (TOPOL).

The monitoring device of the invention is preferably arranged for cutting the access network into a number of distinct serving areas via for example GIS (Geographical Information System) based algorithms. The serving areas can vary in shape and size depending on whether they are CO or RT fed. Note that this cutting generates a coarse first segmentation of the access network. Fig.2 illustrates an example.

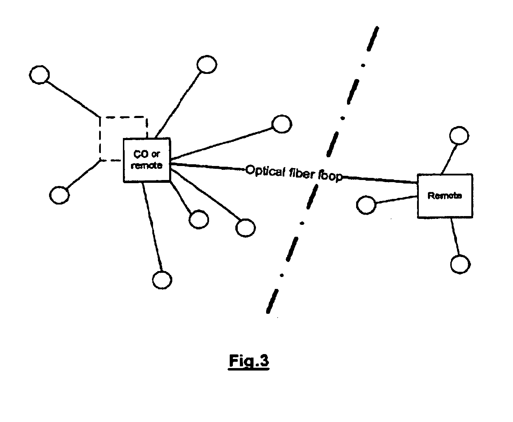

In an additional step a subsequent refinement of the network based on further knowledge of the remote terminals (RTs) may be preferable. Especially if at a certain point in time the system would be required to provide simulated DSM gains in the case that the RT locations would replace the current CO-fed endpoints of the subscriber lines, such a further refinement may be useful. Also, when RTs are subtended from the CO, a legacy database likely contains the CO as endpoint and not the RT location. This would invalidate the predictions, as well as increasing the granularity of the serving areas (see Fig.3).

Building up the crosstalk database (and, optionally, the topology database) is a process that can run continuously or can be triggered at a certain time instant. It uses reports from the DSLAM as well as, if available, data from the network analyzer and from the operator's database to constantly refine the database of crosstalk coupling between two lines. Because of the segmentation, this process runs on a single serving area, also allowing the distribution of the required measurements (as subscriber lines from different serving areas cannot be terminated in the same DSLAM).

In general the process of building up the crosstalk database can be described as follows. First a serving area has to be selected. Next, one gets all line states (active or down) and stores them in a state vector. Then all SNR reports on the active lines are collected and stored in a vector. At a later time one gets again the line states (i.e. whether the line is active or down) and stores them in a second state vector. For lines the state of which remains unchanged, the crosstalk cannot be measured directly. Therefore, an algorithm is used to determine an upper bound on the crosstalk level they induce. Then the crosstalk database is updated with the obtained numerical values. Lines having a different state in the second state vector than in the first have either joint or left the set of active lines, thereby causing a change in the observed crosstalk levels. An algorithm combines the information before and after joining/leaving to recalculate a (possibly more accurate) crosstalk upper bound.
Performing the procedure at several instants in time provides the database with more information as time progresses, thereby lowering the upper bounds. It is however possible that blind spots remain due to always-on users and users that always switch their modems on and off at similar times. To avoid this drawback, one can force a resync at a time of low activity, such that the blind spots are removed.

Another likely future scenario is the addition of the L2 state. In DSL, the L2 state is a low transmit power mode that can be entered when there is no or only a low amount of data traffic on the line. This is likely to cause more variations in the transmit power levels inside a serving area and makes the occurrence of blind spots less likely. It further renders retrains for the sake of database build-up unnecessary.
Another likely future scenario is the addition of the already mentioned DSM level3 techniques. In this case, the crosstalk coefficients are determined by the vectoring unit and can potentially be directly read out and stored in the database.

For constructing the topology database the following approach may be followed. Again, first a serving area is selected. Next, for all lines in this serving area, a representation of the topology features (such as length and gauge of each section) is obtained, for example by line testing techniques (like SELT or double-ended line testing (DELT)). Next, all data is processed, resulting in possible groupings for each line. Next, reciprocity is verified and refinements are made. If required, the procedure can be repeated for further improvements.

In case both a crosstalk database and a topology database are available, a cross-verification of the data becomes possible. From the physics of crosstalk, it is clear that the presence of crosstalk indicates the physical presence of two pairs, at least for part of the loop. Hence, the crosstalk database can be used to further expand the topology database. Vce-versa, the topology database can be mined to pick suitable candidates for a forced resync - in other words, one should first look at those blind spots which according to the topology database could or could not have some coupling.

Some more details on the main information source are now given. The database contains a list of the various serving areas. This list may be obtained by applying a segmentation on the full DSL access network. The table below represents a possible form of the field 'serving area'.

**Table 1 : implementation of field 'Serving area'**

| **Serving area Field** | **Contains** | |
|---|---|---|
| ID | A unique ID for each serving area. | |
| vector<SLFULL> | All of the data associated with a particular subscriber line. Each of these SLFULLs will have: | |
| | ID | A unique ID number. |
| | DSLAM | The DSLAM it is connected to. |
| | PORT | The LT and port it is connected to. |
| | SL* | A link to the SL record in SLBASE (or any unique reference to that data). |
| | NA* | A link to the DSLAM and/or NA data associated with that particular DSLAM and PORT. |
| XT | One or more crosstalk database (multiple snapshots in time). | |
| TOPOL | The topology database (multiple snapshots in time). | |

The crosstalk data records may have a shape as shown in Table 2. The stored information contains the best estimations that the monitoring tool has been able to derive of the crosstalk coupling between different lines in a particular serving area.

**Table 2 : implementation of field 'Crosstalk'**

| **XT: Field** | **Contains** | |
|---|---|---|
| matrix<XTLINE> | A sparse matrix of XTLINEs, each one detailing the crosstalk from a particular line into another. Possible information it contains is: | |
| | FROM, INTO | The unique Ids of the SLFULL lines in question |
| | Cmax(f) | The upper bound on the relative crosstalk, per tone. This could be initialized to the maximum or 99% value of the new crosstalk model as agreed on in ANSI |
| | Cconf | A confidence level indicating the accuracy of Cmax(f). This could be based on the amount of measurements performed, whether it is an upper bound or a direct measurement, whether it is the initial 99% value, ... |

The records in the topology database may be organised as follows. There may be one record per loop, containing for each line the last n representations of the loop topology, a link to the network analyzer data on the line and a list of lines that might possibly be grouped with this one.

As mentioned earlier, the operator's database contains the subscriber loop SL data. These databases may be organised in many different ways according to the operator's needs and habits. However, to give an idea, Table 3 illustrates what the records of the type SL (subscriber line) contained in the SLBASE database could look like.

**Table 3 : subscriber loop data**

| **SL :Field** | **Contains** |
|---|---|
| ID | Internal legacy ID number (unique) |
| Phone | Subscriber phone number |
| DSLAM | Information correlated to the location of the DSLAM, the starting point of the subscriber loop. |
| Address | Subscriber address, the end point of the subscriber loop. |
| DSLType | The type of broadband access used on the loop: {ADSL, ADSL2, ADSL2+, VDSL2} |

Some examples of use cases and various discrepancies that can be detected with the tool of the present invention are the following.

If the statistical distribution of values contained in the crosstalk database does not match the distribution predicted by the model or the distribution of the rest of the network, this may be an indication of a binder fault or a misconfiguration.

Suppose a downstream power backoff (DPBO) is applied and it is observed that several CO lines in a particular binder are impacted by high noise in the downstream direction. The tool of the invention allows determining whether the crosstalk noise is higher than would be expected if the RT lines would apply DPBO.

Suppose UPBO is applied and it is observed that several long lines in a particular binder are impacted by high crosstalk noise in upstream. The crosstalk noise is higher than would be expected if the short lines would apply UPBO.

In case band plan policing is applied, it can be detected that lines show high noise in the upstream at downstream frequencies of alternative band plans or vice versa.

Based on the detection of the above phenomena advice can be given in order to optimize the DPBO/UPBO settings or to modify the band plans.

The proposed method also works in an unbundled environment. If an operator has a topology database, it may not include information on the competitor's crosstalk and topology. In that case, sufficient information is still available: the loops line length, the expected maximum or statistical crosstalk level, statistical line length distribution. In its minimal form, the crosstalk database contains the crosstalk amplitudes of the other lines from the same DSLAM and the topology database contains the line lengths of each of these lines.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claim are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Method for monitoring the operating environment of a plurality of communication channels in an access network, comprising the steps of :
- determining a value indicating the crosstalk coupling between a first and a second communication channel of said plurality, based on measurements or by use of a suitable model;
- predicting information on crosstalk coupling between said first and said second communication channel based on information in a database being indicative of crosstalk coupling between said at least some communication channels of said plurality,
- comparing said information predicted in the previous step with the determined value indicating the crosstalk coupling and identifying based on said comparison possible anomalies in the access network.

2. Method for monitoring as in claim 1, whereby the step of predicting information is also based on topology information from a database containing information on the topology of said transmission lines.

3. Method for monitoring as in claim 1 or 2, whereby the step of predicting information is based on information of a further database belonging to the operator of said access network.

4. Method for monitoring as in claim 1, further comprising the step of selecting a part of the access network that is to be monitored.

5. Method for monitoring as in any of claims 1 to 4, further comprising the step of, if an anomaly is identified, detecting the cause and/or impact of said anomaly.

6. Method for monitoring as in claim 5, further comprising the step of proposing actions to counter the effect of the anomaly.

7. Method as in any of claims 1 to 6, wherein said access network is a DSL access network.

8. Method for constructing a database containing information indicative of crosstalk coupling for use in a method for monitoring as in any of claims 1 to 6, comprising the steps of
- determining an indication of the crosstalk coupling between a first and a second channel of a plurality of communication channels of an access network,
- deriving from said determined indication of an upper bound for the crosstalk coupling between said first and second communication channel, and
- storing said upper bound in the database.

9. Device for monitoring the operating environment of a plurality of communication channels in an access network, said device comprising
- means for determining a value indicating the crosstalk coupling between at least two of said communication channels, based on measurements or by use of a suitable model;
- information gathering means for gathering information from a database containing information indicative of crosstalk coupling between said at least two of said communication channels,
**characterised in that** said device further comprises processing means for predicting information on crosstalk coupling between said at least two of said communication channels from said gathered information and for comparing said value indicating the crosstalk coupling with said predicted information, said processing means further being arranged for reporting an anomaly depending on the result of the comparison.

10. Device for monitoring as in claim 9, further comprising a selection means for selecting a part of said access network to be monitored.

11. Device for monitoring as in claim 9 or 10, wherein said information gathering means is also arranged for gathering information on the topology of said communication channels.

12. Device for monitoring as in any of claims 9 to 11, further arranged for being provided with information from a network operator's database.

13. Device as in any of claims 9 to 12, whereby said device is integrated in a network analyzer, said network analyzer being arranged for determining an indication on crosstalk coupling between said at least two communication channels.

## Patentansprüche

1. Verfahren zum Überwachen der Betriebsumgebung einer Vielzahl von Kommunikationskanälen in einem Zugangsnetzwerk, umfassend folgende Schritte:
- Bestimmen eines Wertes, der die Nebensprechkopplung zwischen einem ersten und einem zweiten Kommunikationskanal der besagten Vielzahl anzeigt, basierend auf Messungen oder durch Verwenden eines geeigneten Modells;
- Prognostizieren von Informationen über die Nebensprechkopplung zwischen dem besagten ersten und dem besagten zweiten Kommunikationskanal basierend auf Informationen in einer Datenbank, die bezeichnend sind für die Nebensprechkopplung zwischen den besagten mindestens einigen Kommunikationskanälen der besagten Vielzahl,
- Vergleichen der besagten im vorherigen Schritt prognostizierten Informationen mit dem bestimmten Wert, der die Nebensprechkopplung anzeigt, und Identifizieren möglicher Anomalien im Zugangsnetzwerk basierend auf dem besagten Vergleich.

2. Verfahren zum Überwachen nach Anspruch 1, wobei der Schritt des Prognostizierens von Informationen ebenfalls auf Topologieinformationen einer Datenbank basiert, die Informationen über die Topologie der besagten Übertragungsleitungen enthält.

3. Verfahren zum Überwachen nach Anspruch 1 oder 2, wobei der Schritt des Prognostizierens von Informationen auf Informationen von einer weiteren Datenbank basiert, die dem Betreiber des besagten Zugangsnetzwerks gehört.

4. Verfahren zum Überwachen nach Anspruch 1, weiterhin umfassend den Schritt des Auswählens eines Teils des Zugangsnetzwerks, der zu überwachen ist.

5. Verfahren zum Überwachen nach einem beliebigen der Ansprüche 1 bis 4, weiterhin umfassend, falls eine Anomalie identifiziert wird, den Schritt des Erkennens der Ursache und/oder Auswirkung der besagten Anomalie.

6. Verfahren zum Überwachen nach Anspruch 5, weiterhin umfassend den Schritt des Vorschlagens von Maßnahmen, um dem Effekt der Anomalie entgegenzuwirken.

7. Verfahren nach einem beliebigen der Ansprüche 1 bis 6, wobei das besagte Zugangsnetzwerk ein DSL-Zugangsnetzwerk ist.

8. Verfahren zum Erstellen einer Datenbank, die Informationen enthält, die bezeichnend sind für eine Nebensprechkopplung, zur Verwendung in einem Verfahren zum Überwachen nach einem beliebigen der Ansprüche 1 bis 6, umfassend folgende Schritte:
- Bestimmen einer Anzeige der Nebensprechkopplung zwischen einem ersten und einem zweiten Kanal einer Vielzahl von Kommunikationskanälen eines Zugangsnetzwerks,
- Ableiten von der besagten bestimmten Anzeige einer Obergrenze für die Nebensprechkopplung zwischen dem besagten ersten und zweiten Kommunikationskanal, und
- Speichern der besagten Obergrenze in der Datenbank.

9. Vorrichtung zum Überwachen der Betriebsumgebung einer Vielzahl von Kommunikationskanälen in einem Zugangsnetzwerk, wobei die besagte Vorrichtung Folgendes umfasst:
- Mittel zum Bestimmen eines Wertes, der die Nebensprechkopplung zwischen mindestens zwei der besagten Kommunikationskanäle anzeigt, basierend auf Messungen oder durch Verwenden eines geeigneten Modells;
- Informationserfassungsmittel zum Erfassen von Informationen von einer Datenbank, die Informationen enthält, die bezeichnend sind für die Nebensprechkopplung zwischen den besagten mindestens zwei der besagten Kommunikationskanäle,
**dadurch gekennzeichnet, dass** die Vorrichtung weiterhin Folgendes umfasst:
Verarbeitungsmittel zum Prognostizieren von Informationen über die Nebensprechkopplung zwischen den besagten mindestens zwei der besagten Kommunikationskanäle von den besagten erfassten Informationen und zum Vergleichen des besagten Wertes, der die Nebensprechkopplung anzeigt, mit den besagten prognostizierten Informationen, wobei die besagten Verarbeitungsmittel weiterhin angeordnet sind, um eine Anomalie je nach Ergebnis des Vergleichs zu berichten.

10. Vorrichtung zum Überwachen nach Anspruch 9, weiterhin umfassend ein Auswahlmittel zum Auswählen eines Teils des besagten Zugangsnetzwerks, der zu überwachen ist.

11. Vorrichtung zum Überwachen nach Anspruch 9 oder 10, wobei die besagten Informationserfassungsmittel ebenfalls angeordnet sind, um Informationen über die Topologie der besagten Kommunikationskanäle zu erfassen.

12. Vorrichtung zum Überwachen nach einem beliebigen der Ansprüche 9 bis 11, weiterhin angeordnet, um mit Informationen aus einer Datenbank des Netzwerkbetreibers versorgt zu werden.

13. Vorrichtung nach einem beliebigen der Ansprüche 9 bis 12, wobei die besagte Vorrichtung in einem Netzwerkanalysator integriert ist, wobei der besagte Netzwerkanalysator angeordnet ist, um eine Anzeige einer Nebensprechkopplung zwischen den besagten mindestens zwei Kommunikationskanälen zu bestimmen.

## Revendications

1. Procédé de surveillance de l'environnement de fonctionnement d'une pluralité de canaux de communication dans un réseau d'accès, comprenant les étapes suivantes :
- déterminer une valeur indiquant le couplage de diaphonie entre un premier et un deuxième canaux de communication de ladite pluralité, sur la base de mesures ou en utilisant un modèle approprié ;
- prévoir des informations sur un couplage de diaphonie entre ledit premier et ledit deuxième canaux de communication sur la base d'informations dans une base de données indiquant un couplage de diaphonie entre lesdits au moins certains canaux de communication de ladite pluralité,
- comparer lesdites informations prévues dans l'étape précédente à la valeur déterminée indiquant le couplage de diaphonie et identifier, sur la base de ladite comparaison, des anomalies possibles dans le réseau d'accès.

2. Procédé de surveillance selon la revendication 1, l'étape de prédiction d'informations étant également basée sur des informations de topologie provenant d'une base de données contenant des informations sur la topologie desdites lignes de transmission.

3. Procédé de surveillance selon la revendication 1 ou 2, l'étape de prédiction d'informations étant basée sur des informations d'une autre base de données appartenant à l'opérateur dudit réseau d'accès.

4. Procédé de surveillance selon la revendication 1, comprenant en outre l'étape de sélection d'une partie du réseau d'accès qui doit être surveillée.

5. Procédé de surveillance selon l'une quelconque des revendications 1 à 4, comprenant en outre l'étape, si une anomalie est identifiée, de détection de la cause et/ou de l'impact de ladite anomalie.

6. Procédé de surveillance selon la revendication 5, comprenant en outre l'étape de proposition d'actions pour contrer l'effet de l'anomalie.

7. Procédé selon l'une quelconque des revendications 1 à 6, dans lequel ledit réseau d'accès est un réseau d'accès DSL.

8. Procédé de construction d'une base de données contenant des informations indiquant un couplage de diaphonie à utiliser dans un procédé de surveillance selon l'une quelconque des revendications 1 à 6, comprenant les étapes suivantes
- déterminer une indication du couplage de diaphonie entre un premier canal et un deuxième canal d'une pluralité de canaux de communication d'un réseau d'accès,
- dériver à partir de ladite indication déterminée d'une liaison supérieure pour le couplage de diaphonie entre lesdits premier et deuxième canaux de communication, et
- stocker ladite liaison supérieure dans la base de données.

9. Dispositif de surveillance de l'environnement de fonctionnement d'une pluralité de canaux de communication dans un réseau d'accès, ledit dispositif comprenant
- des moyens pour déterminer une valeur indiquant le couplage de diaphonie entre au moins deux desdits canaux de communication, sur la base de mesures ou en utilisant un modèle approprié ;
- des moyens de rassemblement d'informations pour rassembler des informations provenant d'une base de données contenant des informations indiquant un couplage de diaphonie entre lesdits au moins deux canaux parmi lesdits canaux de communication, **caractérisé en ce que** ledit dispositif comprend en outre des moyens de traitement pour prévoir des informations sur un couplage de diaphonie entre lesdits au moins deux canaux parmi lesdits canaux de communication à partir desdites informations rassemblées et pour comparer ladite valeur indiquant le couplage de diaphonie auxdites informations prévues, lesdits moyens de traitement étant en outre conçus pour rapporter une anomalie en fonction du résultat de la comparaison.

10. Dispositif de surveillance selon la revendication 9, comprenant en outre des moyens de sélection pour sélectionner une partie dudit réseau d'accès à surveiller.

11. Dispositif de surveillance selon la revendication 9 ou 10, dans lequel lesdits moyens de rassemblement d'informations sont également conçus pour rassembler des informations sur la topologie desdits canaux de communication.

12. Dispositif de surveillance selon l'une quelconque des revendications 9 à 11, également conçu pour disposer d'informations provenant d'une base de données de l'opérateur de réseau.

13. Dispositif selon l'une quelconque des revendications 9 à 12, ledit dispositif étant intégré dans un analyseur de réseau, ledit analyseur de réseau étant conçu pour déterminer une indication sur un couplage de diaphonie entre lesdits au moins deux canaux de communication.
